# EUROPEAN PATENT SPECIFICATION

(11) **EP 4 500 490 B1**
(45) Date of publication and mention of the grant of the patent: **28.01.2026**
(21) Application number: 23714508.1
(22) Date of filing: 23.03.2023
(51) Int. Cl.: G06V 40/10, G06V 40/20, G07C 9/00, E05F 15/73, G06V 20/52

(54) **DETERMINING INTENT TO OPEN A DOOR**
BESTIMMUNG DER ABSICHT, EINE TÜR ZU ÖFFNEN
DÉTERMINATION DE L'INTENTION D'OUVRIR UNE PORTE

(30) Priority: 24.03.2022 SE 2250364
(43) Date of publication of application: 05.02.2025
(73) Proprietor: ASSA ABLOY AB, 107 23 Stockholm (SE)
(72) Inventor: PERNYER, Kenneth, 737 90 Ängelsberg (SE); RYD, Gustav, 112 39 Stockholm (SE); STYLIANIDIS, Matthaios, 129 33 Hägersten (SE); CRASTO, Nieves, Austin TX 78753 (US)
(74) Representative: Kransell & Wennborg KB
(86) International application number: PCT/EP2023/057422
(87) International publication number: WO 2023/180427

(56) References cited:
- GB-A- 2 579 539
- US-A1- 2022 012 968
- ANDRILUKA MYKHAYLO ET AL: "2D Human Pose Estimation: New Benchmark and State of the Art Analysis", 2014 IEEE CONFERENCE ON COMPUTER VISION AND PATTERN RECOGNITION, IEEE, 23 June 2014 (2014-06-23), pages 3686 - 3693, XP032649517, DOI: 10.1109/CVPR.2014.471

## Description

### TECHNICAL FIELD

The present disclosure relates to the field of determining intent of a person and in particular to determining when there is intent of a person to open a door.

### BACKGROUND

Locks and keys are evolving from the traditional pure mechanical locks. These days, there are wireless interfaces for electronic locks, e.g. by interacting with a portable key device. For instance, Radio Frequency Identification (RFID) has been used as the wireless interface.

When RFID is used, the user needs to present the portable key device in close proximity to a reader connected to the lock. RFID requires a relatively large antenna in the reader by the lock and uses a large amount of energy. Moreover, RFID is not an interface which can be used for remote system management of the lock; only system management using an RFID device in close proximity of the lock can be used for such tasks. Hence, to allow remote system management, e.g. configuration and monitoring, a second radio interface needs to be added.

Another solution is to use Bluetooth Low Energy (BLE) or ultra-wideband (UWB), or Ultra High Frequency (UHF). However, for these communication protocols, the range is longer, and it is difficult to determine intent for a particular door. One problem if the lock of a door unlocks whenever a valid portable key device is within range is that when a person on the inside of an electronic lock walks past the electronic lock, the electronic lock would open, and an unauthorised person on the outside could gain access to the restricted physical space.

Additionally, for unlocked automatic doors, e.g. sliding doors or swing doors with door openers, it is desired to determine intent to open the door when there is intent, but to avoid opening the door when there is no intent, e.g. to save energy for climatising indoor space.

### SUMMARY

One object is to improve determination of intent of a person to open a door. The invention has four aspects, namely that of a method for determining intent to open a door, a corresponding determinator, a corresponding computer program and a corresponding computer program product. These aspects are defined in independent claims 1, 10, 14, and 15, respectively. The dependent claims define preferred embodiments.

According to a first aspect, it is provided a method for determining intent to open a door, the method being performed by an intent determiner. The method comprises: obtaining an image of a physical space near the door; determining a position and orientation of a person in the image by providing the image to an image machine learning model, wherein the image machine learning model is configured to determine position and orientation of a person in the image, wherein the image machine learning model is configured to determine a stick figure of the person based on the image; adding a data item, comprising an indicator of the position and an indicator of the orientation, to a data structure; determining based on the data structure, whether there is intent of the person to open the door; and repeating the method until an exit condition is true.

In the step of adding the data item, the data item may comprise coordinates of anatomical features represented by the stick figure.

In the step of adding the data item, the data item may comprise an orientation of at least one anatomical feature represented by the stick figure.

The adding data item may comprise adding the data item while preserving its position in a sequence in relation to any preceding data items in the data structure.

The exit condition may be true when the intent determiner determines that there is intent of the person do to open the door, in which case the method further comprises: sending a signal to proceed with a door opening process.

The exit condition may be true when the person is no longer determined to be in the image.

The determining a position and orientation may comprise determining a centre point of the person in the image, in which case the centre point is the indicator of position.

The determining a position and orientation may comprise determining a direction of the person in the image, indicating a direction of a torso of the person, in which case the direction of the person in the image is the indicator of orientation.

The adding the data item may comprise adding an indicator of time to the data structure, in association with the data item.

The determining whether there is intent may comprise providing the data structure to an intent machine learning model, in which case the intent machine learning model is configured to infer intent or lack of intent based on the input data structure.

According to a second aspect, it is provided an intent determiner for determining intent to open a door. The intent determiner comprises: a processor; and a memory storing instructions that, when executed by the processor, cause the intent determiner to: obtain an image of a physical space near the door; determine a position and orientation of a person in the image by providing the image to an image machine learning model, wherein the image machine learning model is configured to determine position and orientation of a person in the image, wherein the image machine learning model is configured to determine a stick figure of the person based on the image; add a data item, comprising an indicator of the position and an indicator of the orientation, to a data structure; determine based on the data structure, whether there is intent of the person to open the door; and repeat the instructions until an exit condition is true.

The data item may comprise coordinates of anatomical features represented by the stick figure.

The data item may comprises an orientation of at least one anatomical feature represented by the stick figure.

The instructions to add the indicator may comprise instructions that, when executed by the processor, cause the intent determiner to: send a signal to add the data item while preserving its position in a sequence in relation to any preceding indicators in the data structure.

The exit condition may be true when the intent determiner determines that there is intent of the person do to open the door, in which case the intent determiner further comprises instructions that, when executed by the processor, cause the intent determiner to: send a signal to proceed with a door opening process.

The exit condition may be true when the person is no longer determined to be in the image.

The instructions to determine a position and orientation may comprise instructions that, when executed by the processor, cause the intent determiner to determine a centre point of the person in the image, in which case the centre point is the indicator of position.

The instructions to determine a position and orientation may comprise instructions that, when executed by the processor, cause the intent determiner to determine a direction of the person in the image, indicating a direction of a torso of the person, in which case the direction of the person in the image is the indicator of orientation.

The instructions to add the data item may comprise instructions that, when executed by the processor, cause the intent determiner to add an indicator of time to the data structure, in association with the data item.

The instructions to determine whether there is intent may comprise instructions that, when executed by the processor, cause the intent determiner to provide the data structure to an intent machine learning model, in which case the intent machine learning model is configured to infer intent or lack of intent based on the input data structure.

According to a third aspect, it is provided a computer program for determining intent to open a door. The computer program comprises computer program code which, when executed on an the intent determiner, causes the intent determiner to: obtain an image of a physical space near the door; determine a position and orientation of a person in the image by providing the image to an image machine learning model, wherein the image machine learning model is configured to determine position and orientation of a person in the image, wherein the image machine learning model is configured to determine a stick figure of the person based on the image; add a data item, comprising an indicator of the position and an indicator of the orientation, to a data structure; determine based on the data structure, whether there is intent of the person to open the door; and repeat the computer program code until an exit condition is true.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram showing an environment in which embodiments presented herein can be applied;
Figs 2A-D are schematic diagrams illustrating embodiments of where the intent determiner can be implemented;
Fig 3 is a schematic diagram illustrating position and orientation of a person, e.g. the person of Fig 1;
Fig 4 is a schematic diagram illustrating a stick figure derived from an image of the user, captured by the camera;
Fig 5 is a flow chart illustrating embodiments of methods for determining intent to open a door, performed by an intent determiner;
Fig 6 is a schematic diagram illustrating components of the intent determiner of Figs 2A-D; and
Fig 7 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Embodiments presented herein provide an intent determiner to determine when there is intent of a person to open a door. A camera (or other imaging device) repetitively obtains images of an area near the door. For each image, the intent determiner abstracts the anatomy of a person to a stick figure, to determine a position and orientation of the person and stores this in a data structure. Intent to pass through the door is then determined based on the data structure, e.g. using a machine learning model.

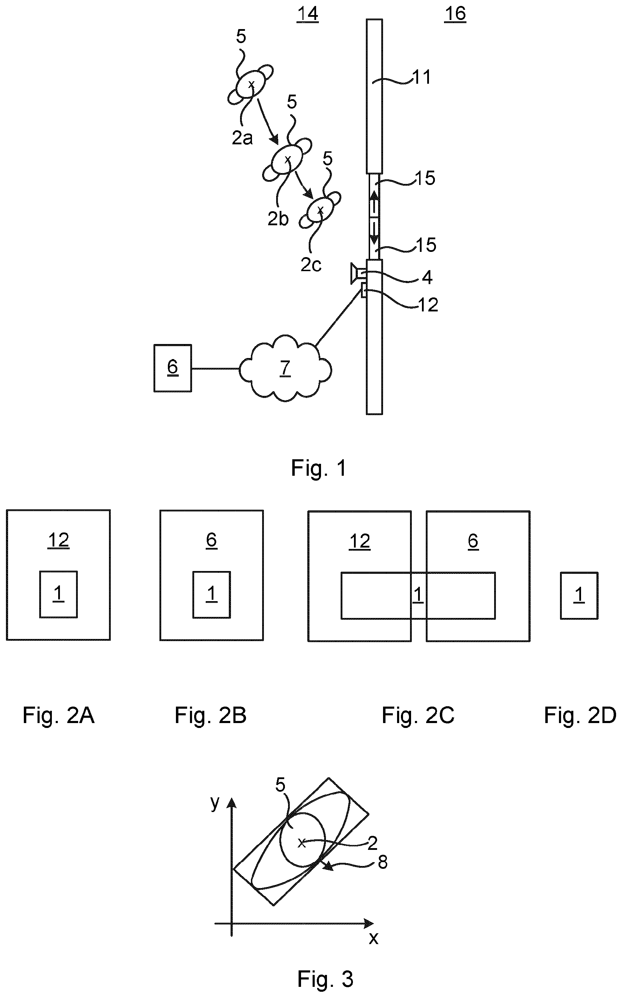

Fig 1 is a schematic diagram showing an environment in which embodiments presented herein can be applied. Access to a physical space 16 is restricted by an openable door 15, which is selectively unlockable. The door 15 stands between the restricted physical space 16 and an accessible physical space 14. In other words, the restricted physical space 16 is inside the door 15, and the accessible physical space 14 is outside the door 15. While the door 15 in Fig 1 is shown as a dual-leaf sliding door, the door 15 can be any suitable door type, e.g. single-leaf sliding door, swing door, revolving door, etc. In order to unlock or lock the door 15, an electronic lock 12 is optionally provided. The electronic lock 12 can be in an unlocked state or locked state. The door 15 is provided in a surrounding fixed structure 11, such as a wall or fence.

When the access control by the electronic lock 12 results in granted access, the electronic lock 12 is set in an unlocked state. When the electronic lock 12 is in the unlocked state, the door 15 can be opened and when the electronic lock 12 is in a locked state, the door 15 cannot be opened. In this way, access to a closed space 16 is controlled by the electronic lock 12. It is to be noted that the electronic lock 12 can be mounted in the fixed structure 11 by the door 15 (as shown) or in the door 15 itself (not shown).

A camera 4, or other image capturing device, is provided to capture images of the area near the door 15. This allows the camera 4 to capture when a person 5 moves from a first position 2a, to a second position 2b and on to a third position 2c. The camera can be provided mounted to the physical structure 11, as shown, or in any other suitable position, such as above the door 15 or mounted to a ceiling above the space just outside the door, to capture a person near the door. The camera can be configured to capture an image based on visual light/IR light and/or depth information e.g. based on lidar, radar, stereo vision, etc. Hence, images from the camera can be 2D (two-dimensional) images or 3D (three-dimensional) images.

As described in more detail below, images from the camera 4 are analysed sequentially to thereby follow the position and orientation the person 5 over time, allowing the determination of whether the person 3 shows intent to enter through the door 5 or not.

The electronic lock 12 and/or the camera 4 optionally contains communication capabilities to connect to a server 6 for the electronics access control system 10 via a communication network 7. The communication network 7 can be a wide area network, such as the Internet, to which the portable key devices 2, 3 can connect e.g. via WiFi (e.g. any of the IEEE 802.11x standards) or a cellular network, e.g. LTE (Long Term Evolution), next generation mobile networks (fifth generation, 5G), UMTS (Universal Mobile Telecommunications System) utilising W-CDMA (Wideband Code Division Multiplex), etc.

Figs 2A-D are schematic diagrams illustrating embodiments of where the intent determiner 1 can be implemented. The intent determiner 1 is used for determining when there is intent by a person to open a door.

In Fig 2A, the intent determiner 1 is shown implemented in the electronic lock 12. The electronic lock 12 is thus the host device for the intent determiner 1.

In Fig 2B, the intent determiner 1 is shown implemented in the server 6. The server 6 is thus the host device for the intent determiner 1.

In Fig 2C, the intent determiner 1 is shown implemented partly in the server 6 and partly in the electronic lock 12. Both the server 6 and the electronic lock 12 are thus host devices for parts of the intent determiner 1.

In Fig 2D, the intent determiner 1 is shown implemented as a stand-alone device.

Fig 3 is a schematic diagram illustrating an image captured by the camera of Fig 1, in which it can be seen a position and orientation of a person, e.g. the person 3 of Fig 1. The position 2 is shown as a centre position of the user 5 (in the coordinate system x-y of the image from the camera 4). An orientation is shown as a direction 8 of the torso of the user 5. A bounding box 10 is also shown, being a rectangle that only just encompasses the person in the image. The bounding box 10 can be provided such that it touches the outer edges of the person 5, or there can be a small margin provided between the bounding box 10 and the person 5. The phrase bounding box is sometimes also called minimum bounding box.

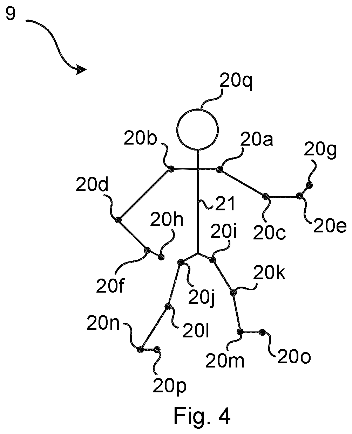

Fig 4 is a schematic diagram illustrating a stick figure 9 derived from an image of the user, captured by the camera, using an image machine learning (ML) model. The stick figure shows anatomical features such as joints and other anatomical features, as well as limbs and other body parts between the anatomical features.

The anatomical features that are identified can be a predefined set of joints and other anatomical features. One example of such a set of anatomical features is illustrated in Fig 4. It is there shown a left shoulder 20a, a right shoulder 20b, a left elbow 20c, a right elbow 20d, a left wrist joint 20e, a right wrist joint 20f, a left hand end 20g, a right hand end 20h, a left hip joint 20i, a right hip joint 20j, a left knee 20k, a right knee 20l, a left heel 20m, right heel 20n, a left foot end 20o, a right foot end 20p and a head 20q. Another anatomical feature that can be derived from the other anatomical features is the torso 21. It is to be noted that any other suitable set of anatomical features can be used. For instance, the hand ends, 20g-h and/or the food ends 20o, 20p may be omitted.

Optionally, the image ML model not only identify the anatomical features, but also an orientation of selected features. For instance, the orientation of the head 20q can be determined, e.g. by image processing of the image of the user, based on identification of face features (e.g. nose, eyes, mouth, etc.). Additionally, an orientation of the torso 21 can be determined either based on image processing of the image of the user, and/or based on the relative coordinates of the other anatomical features.

The stick figure, when analysed of the same user over time, can be used as a clear indication of movement. The abstraction of body posture and movement of body features (when analysed over several images) is not only effective in data use, but accurately depicts movement of the person. Additionally, since no images in themselves need to be saved, privacy of the person is preserved.

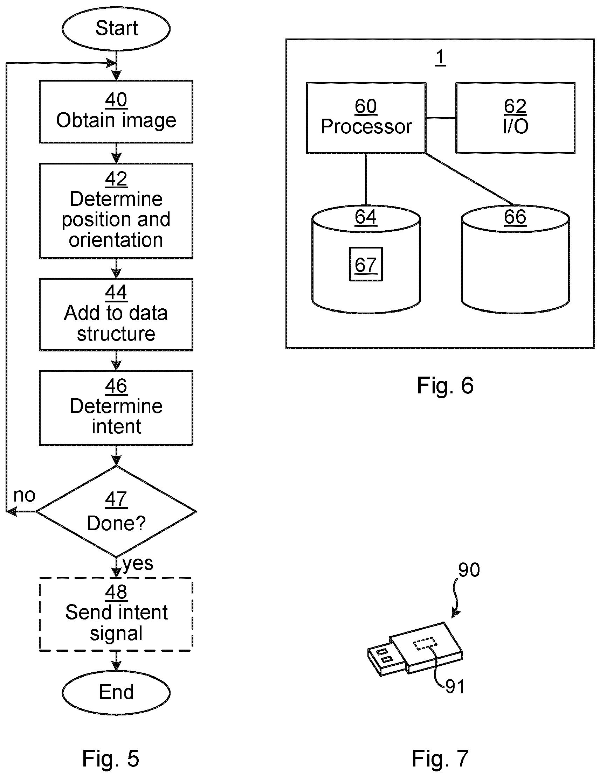

Fig 5 is a flow chart illustrating embodiments of methods for determining intent to open a door, performed by an intent determiner 1.

In an *obtain image* step 40, the intent determiner 1 obtains an image of a physical space near the door. The physical space being near the door is here to be construed as the physical space being a space through which a person has to pass in order to pass through the door, and that is sufficiently near to be able to be able to determine position and orientation in an image of the near space.

In a *determine position and orientation* step 42, the intent determiner 1 determines a position and orientation of a person in the image. Optionally, a bounding box (see Fig 3) is also determined. As explained above, the bounding box is a rectangle that only just encompasses the person in the image. The bounding box can be used to indicate an orientation of the person (of two possible orientations, that over time can be used to determine a likely direction, presuming that the person is walking forwards).

Optionally, a centre point of the person in the image is determined. The centre point is then the indicator of position.

Optionally, a direction of the person in the image is determined. The direction indicates a direction of a torso of the person. The shape of the head and/or head organs (e.g. eye(s), ear(s), mouth, nose, etc.) can also be used to find the direction of the person. The direction of the person in the image is then the indicator of orientation.

This step comprises providing the image to an image ML model, wherein the image ML model is configured to determine position and orientation of a person in the image. The image ML model is configured to determine a stick figure (see Fig 4 and description above) of the person based on the image. As explained above, the image can be a 2D image or 3D image. The image ML model can be any suitable type of machine learning model, e.g. a convolutional neural network (CNN), a hidden Markov model (HMM), etc.
In an *add to data structure* step 44, the intent determiner 1 adds a data item, comprising an indicator of the position and indicator of the orientation to a data structure. Optionally, the data item comprises coordinates and/or an orientation of (at least some) anatomical features represented by the stick figure 9. In this case, data of the stick figure, e.g. coordinates and identities of the anatomical features 20a-p, 21 of the person, and optionally orientation of selected anatomical features (e.g. the face and/or the torso) of the person, is also added to the data structure in the data item. The identities of the anatomical features 20a-p can be implicit by a defined position in a vector or array comprising the coordinates/orientation, i.e. each position in the vector or array is predefined to be associated with a specific anatomical feature. Each position can then contain the coordinates/orientation of that anatomical feature. Alternatively, each coordinate/orientation is coupled with an explicit identifier (within the data structure) of the anatomical feature to which the coordinate/orientation pertains. The coordinates and optional orientation can be stored as 3D coordinates or 2D coordinates, based on the images type (2D/3D) and optional processing.
The adding the data item can comprises adding the data item while preserving its position in a sequence in relation to any preceding data item in the data structure. For instance, an indicator of time (e.g. timestamp) can be added to the data structure, in association with or part of the data item . Alternatively or additionally, a sequence number can be added in association with the data item. Alternatively or additionally, the data structure in itself maintains a sequence, such that any newly added data item preserves the order in which the data item were added. This can e.g. be achieved by the data structure being based on a linked list structure or similar. Since the position of the data item is preserved in a sequence, the data structure can be used to evaluate how the position and orientation of the person evolves over time.

When a bounding box has been determined, details defining the bounding box (e.g. suitable coordinates and/or size data) are also stored in the data structure, in association with the position and orientation of the person in the image.

Optionally, items from the data structure are removed if they are determined to be old (determined by a time stamp or by a number of more recent data items for the person in question in the data structure).

In a *determine intent* step 46, the intent determiner 1 determines, based on the data structure, whether there is intent of the person to open the door. This determination can be based on the sequence of data items in the data structure, wherein the sequence is ordered according to when the data items were added to the data structure. In this way, the movement over time, in position and orientation, is represented by the data structure.

In one embodiment, the determination of whether there is intent can comprise providing the data structure to an intent ML model. The intent ML model is then configured to infer intent (or absence of intent) based on the input data structure (i.e. the data structure comprising the position and orientation of the person as described above). The intent ML model can be any suitable type of machine learning model, e.g. a convolutional neural network (CNN), a hidden Markov model (HMM), LSTM (Long Short-Term Memory), machine learning transformers, etc. The use of machine learning fits well for this determination, since there are only a very limited number of possible outcomes, such as 'person having intent' and 'person not having intent'. It is to be noted that there may be occasions when the image ML model is unable to determine the coordinates for all anatomical features due to inaccuracies in the image and/or partially blocking objects. In this case, such coordinates can be left blank, and the intent ML model still have many other coordinates on which to perform its inference. Alternatively, prior to providing the data structure to the intent ML model, coordinates are estimated where they are not determined by the image ML model.

The intent ML model can be trained using manually annotated training data, e.g. video data (i.e. sequences of 2D or 3D images) where an operator has manually annotated when there is intent for each person in the video data, in which case stick figures are determined corresponding to the same video data and form part of input features to the intent ML model. Alternatively or additionally, the intent ML model can be trained on actual data of when a person enters through the door or not. There may then need to be a manual pushbutton (or gesture recognition, proximity sensor, photosensor, etc.) allowing the person to manually trigger opening of the door when intent is mistakenly not determined by this method from person kinetics. Such mistakes and correction with the pushbutton make valuable training data to improve the performance of the intent determination.

In one embodiment, the determination of whether there is intent can be based on traditional statistical models such as ARIMA (Autoregressive Integrated Moving Average)

In a *done* step 47, the intent determiner 1 determines whether an exit condition is true. In one embodiment, the exit condition is true when (and optionally only when) the person is no longer determined to be in the image. In one embodiment, the exit condition is true when intent is determined.

If the exit condition is true, the method proceeds to an optional *send intent signal* step 48 or ends. If the exit condition is not true, the method returns to the obtain image step 40 to analyse a new image and add data to the data structure for a new intent evaluation as described above.

In the optional *send intent signal* step 48, the intent determiner 1 sends an intent signal, to proceed with a door opening process. This can cause a door opener to open the door for the person. Optionally, the intent signal is used to trigger the electronic lock to perform access control of the person, e.g. using local wireless communication and/or biometrics.

Using embodiments presented herein, a reliable determination of intent of a person to open the door is provided. It is to be noted that the method can optionally be used to simultaneously track multiple people in an image, in which case it is sufficient for one person to show intent for the method to determine intent. By using the data structure containing several instances over time of position and orientation, rather than the analysis of a single image, the effects of different lighting conditions throughout the day, shadows, etc., are mitigated or even eliminated.

Fig 6 is a schematic diagram illustrating components of the intent determiner 1 of Figs 2A-D. It is to be noted that when the intent determiner 1 is implemented in a host device, one or more of the mentioned components can be shared with the host device. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 5 above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The intent determiner 1 further comprises an I/O interface 62 for communicating with external and/or internal entities. Optionally, the I/O interface 62 also includes a user interface.

Other components of the intent determiner 1 are omitted in order not to obscure the concepts presented herein.

Fig 7 shows one example of a computer program product 90 comprising computer readable means. On this computer readable means, a computer program 91 can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 6. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for determining intent to open a door, the method being performed by an intent determiner (1), the method comprising:
obtaining (40) an image of a physical space near the door;
determining (42) a position and orientation of a person in the image by providing the image to an image machine learning model, wherein the image machine learning model is configured to determine position and orientation of a person in the image, wherein the image machine learning model is configured to determine a stick figure (9) of the person based on the image;
adding (44) a data item, comprising an indicator of the position and an indicator of the orientation, to a data structure;
determining (46) based on the data structure, whether there is intent of the person to open the door, which comprises providing the data structure to an intent machine learning model, wherein the intent machine learning model is configured to infer intent or lack of intent based on the input data structure;
training the intent machine learning model when a user manually triggers opening of the door when intent is mistakenly not determined; and
repeating the method until an exit condition is true.

2. The method according to claim 1, wherein in the step of adding (44) the data item, the data item comprises coordinates of anatomical features represented by the stick figure (9).

3. The method according to claim 1 or 2, wherein in the step of adding (44) the data item, the data item comprises an orientation of at least one anatomical feature represented by the stick figure (9).

4. The method according to any one of the preceding claims, wherein the adding (44) data item comprises adding the data item while preserving its position in a sequence in relation to any preceding data items in the data structure.

5. The method according to any one of the preceding claims, wherein the exit condition is true when the intent determiner (1) determines that there is intent of the person do to open the door, and wherein the method further comprises:
sending (48) a signal to proceed with a door opening process.

6. The method according to any one of claims 1 to 4, wherein the exit condition is true when the person is no longer determined to be in the image.

7. The method according to any one of claims 1 to 6, wherein the determining (42) a position and orientation comprises determining a centre point of the person in the image, and wherein the centre point is the indicator of position.

8. The method according to any one of claims 1 to 7, wherein the determining (42) a position and orientation comprises determining a direction of the person in the image, indicating a direction of a torso of the person, and wherein the direction of the person in the image is the indicator of orientation.

9. The method according to any one of claims 1 to 8, wherein the adding (44) the data item comprises adding an indicator of time to the data structure, in association with the data item.

10. An intent determiner (1) for determining intent to open a door, the intent determiner (1) comprising:
a processor (60); and
a memory (64) storing instructions (67) that, when executed by the processor, cause the intent determiner (1) to:
obtain an image of a physical space near the door;
determine a position and orientation of a person in the image by providing the image to an image machine learning model, wherein the image machine learning model is configured to determine position and orientation of a person in the image, wherein the image machine learning model is configured to determine a stick figure (9) of the person based on the image;
add a data item, comprising an indicator of the position and an indicator of the orientation, to a data structure;
determine based on the data structure, whether there is intent of the person to open the door, which comprises providing the data structure to an intent machine learning model, wherein the intent machine learning model is configured to infer intent or lack of intent based on the input data structure;
train the intent machine learning model when a user manually triggers opening of the door when intent is mistakenly not determined; and
repeat the instructions until an exit condition is true.

11. The intent determiner (1) according to claim 10, wherein the data item comprises coordinates of anatomical features represented by the stick figure (9).

12. The intent determiner (1) according to claim 10 or 11, wherein the data item comprises an orientation of at least one anatomical feature represented by the stick figure (9).

13. The intent determiner (1) according to any one of claims 10 to 12, wherein the instructions to add the indicator comprises instructions (67) that, when executed by the processor, cause the intent determiner (1) to: send a signal to add the data item while preserving its position in a sequence in relation to any preceding indicators in the data structure.

14. A computer program (67, 91) for determining intent to open a door, the computer program comprising computer program code which, when executed on an the intent determiner (1), causes the intent determiner (1) to:
obtain an image of a physical space near the door;
determine a position and orientation of a person in the image by providing the image to an image machine learning model, wherein the image machine learning model is configured to determine position and orientation of a person in the image, wherein the image machine learning model is configured to determine a stick figure (9) of the person based on the image;
add a data item, comprising an indicator of the position and an indicator of the orientation, to a data structure;
determine based on the data structure, whether there is intent of the person to open the door, which comprises providing the data structure to an intent machine learning model, wherein the intent machine learning model is configured to infer intent or lack of intent based on the input data structure;
train the intent machine learning model when a user manually triggers opening of the door when intent is mistakenly not determined; and
repeat the computer program code until an exit condition is true.

15. A computer program product (64, 90) comprising a computer program according to claim 14 and a computer readable means comprising non-transitory memory in which the computer program is stored.

## Patentansprüche

1. Verfahren zum Bestimmen einer Absicht, eine Tür zu öffnen, wobei das Verfahren durch einen Absichtsbestimmer (1) durchgeführt wird, wobei das Verfahren umfasst:
Erhalten (40) eines Bildes eines physischen Raums in der Nähe der Tür;
Bestimmen (42) einer Position und Ausrichtung einer Person im Bild durch Bereitstellen des Bildes für ein Bild-Maschinenlernmodell, wobei das Bild-Maschinenlernmodell dazu konfiguriert ist, Position und Ausrichtung einer Person im Bild zu bestimmen, wobei das Bild-Maschinenlernmodell dazu konfiguriert ist, basierend auf dem Bild ein Strichmännchen (9) der Person zu bestimmen;
Hinzufügen (44) eines Datenelements, das einen Indikator der Position und einen Indikator der Ausrichtung umfasst, zu einer Datenstruktur;
Bestimmen (46), basierend auf der Datenstruktur, ob die Person die Absicht hat, die Tür zu öffnen, was Bereitstellen der Datenstruktur für ein Absichtsmaschinenlernmodell umfasst, wobei das Absichtsmaschinenlernmodell konfiguriert ist, basierend auf der Eingabedatenstruktur Absicht oder Fehlen einer Absicht abzuleiten;
Trainieren des Absichtsmaschinenlernmodells, wenn ein Benutzer Öffnen der Tür manuell auslöst, wenn Absicht fälschlicherweise nicht bestimmt wurde; und
Wiederholen des Verfahrens, bis eine Austrittsbedingung erfüllt ist.

2. Verfahren nach Anspruch 1, wobei im Schritt zum Hinzufügen (44) des Datenelements das Datenelement Koordinaten anatomischer Merkmale umfasst, die durch das Strichmännchen (9) dargestellt werden.

3. Verfahren nach Anspruch 1 oder 2, wobei im Schritt zum Hinzufügen (44) des Datenelements das Datenelement eine Ausrichtung mindestens eines anatomischen Merkmals umfasst, das durch das Strichmännchen (9) dargestellt wird.

4. Verfahren nach einem der vorstehenden Ansprüche, wobei das Hinzufügen (44) eines Datenelements Hinzufügen des Datenelements unter Beibehaltung seiner Position in einer Sequenz in Bezug auf alle vorstehenden Datenelemente in der Datenstruktur umfasst.

5. Verfahren nach einem der vorstehenden Ansprüche, wobei die Austrittsbedingung erfüllt ist, wenn der Absichtsbestimmer (1) bestimmt, dass die Person die Absicht hat, die Tür zu öffnen, und wobei das Verfahren weiter umfasst:
Senden (48) eines Signals zum Fortsetzen eines Türöffnungsprozesses.

6. Verfahren nach einem der Ansprüche 1 bis 4, wobei die Austrittsbedingung erfüllt ist, wenn bestimmt wird, dass sich die Person nicht mehr im Bild befindet.

7. Verfahren nach einem der Ansprüche 1 bis 6, wobei das Bestimmen (42) einer Position und Ausrichtung Bestimmen eines Mittelpunkts der Person im Bild umfasst und wobei der Mittelpunkt der Positionsindikator ist.

8. Verfahren nach einem der Ansprüche 1 bis 7, wobei das Bestimmen (42) einer Position und Ausrichtung Bestimmen einer Richtung der Person im Bild umfasst, was eine Richtung eines Rumpfes der Person angibt, und wobei die Richtung der Person im Bild der Indikator für Ausrichtung ist.

9. Verfahren nach einem der Ansprüche 1 bis 8, wobei das Hinzufügen (44) des Datenelements Hinzufügen eines Zeitindikators zur Datenstruktur in Verbindung mit dem Datenelement umfasst.

10. Absichtsbestimmer (1) zum Bestimmen einer Absicht, eine Tür zu öffnen, wobei der Absichtsbestimmer (1) umfasst:
einen Prozessor (60); und
einen Speicher (64), der Anweisungen (67) speichert, die, wenn sie von dem Prozessor ausgeführt werden, den Absichtsbestimmer (1) veranlassen zum:
Erhalten eines Bildes eines physischen Raums in der Nähe der Tür;
Bestimmen einer Position und Ausrichtung einer Person im Bild durch Bereitstellen des Bildes für ein Bild-Maschinenlernmodell, wobei das Bild-Maschinenlernmodell dazu konfiguriert ist, Position und Ausrichtung einer Person im Bild zu bestimmen, wobei das Bild-Maschinenlernmodell dazu konfiguriert ist, basierend auf dem Bild ein Strichmännchen (9) der Person zu bestimmen;
Hinzufügen eines Datenelements, das einen Indikator der Position und einen Indikator der Ausrichtung umfasst, zu einer Datenstruktur;
Bestimmen, basierend auf der Datenstruktur, ob die Person die Absicht hat, die Tür zu öffnen, was Bereitstellen der Datenstruktur für ein Absichtsmaschinenlernmodell umfasst, wobei das Absichtsmaschinenlernmodell konfiguriert ist, basierend auf der Eingabedatenstruktur Absicht oder Fehlen einer Absicht abzuleiten;
Trainieren des Absichtsmaschinenlernmodells, wenn ein Benutzer Öffnen der Tür manuell auslöst, wenn fälschlicherweise Absicht nicht bestimmt wurde.
Wiederholen der Anweisungen, bis eine Austrittsbedingung erfüllt ist.

11. Absichtsbestimmer (1) nach Anspruch 10, wobei das Datenelement Koordinaten anatomischer Merkmale umfasst, die durch das Strichmännchen (9) dargestellt werden.

12. Absichtsbestimmer (1) nach Anspruch 10 oder 11, wobei das Datenelement eine Ausrichtung mindestens eines anatomischen Merkmals umfasst, das durch das Strichmännchen (9) dargestellt wird.

13. Absichtsbestimmer (1) nach einem der Ansprüche 10 bis 12, wobei die Anweisungen zum Hinzufügen des Indikators Anweisungen (67) umfassen, die, wenn sie vom Prozessor ausgeführt werden, den Absichtsbestimmer (1) veranlassen zum: Senden eines Signals zum Hinzufügen des Datenelements unter Beibehaltung seiner Position in einer Sequenz in Bezug auf alle vorstehenden Indikatoren in der Datenstruktur.

14. Computerprogramm (67, 91) zum Bestimmen einer Absicht, eine Tür zu öffnen, wobei das Computerprogramm Computerprogrammcode umfasst, der, wenn er auf einem Absichtsbestimmer (1) ausgeführt wird, den Absichtsbestimmer (1) veranlasst zum:
Erhalten eines Bildes eines physischen Raums in der Nähe der Tür;
Bestimmen einer Position und Ausrichtung einer Person im Bild durch Bereitstellen des Bildes für ein Bild-Maschinenlernmodell, wobei das Bild-Maschinenlernmodell dazu konfiguriert ist, Position und Ausrichtung einer Person im Bild zu bestimmen, wobei das Bild-Maschinenlernmodell dazu konfiguriert ist, basierend auf dem Bild ein Strichmännchen (9) der Person zu bestimmen;
Hinzufügen eines Datenelements, das einen Indikator der Position und einen Indikator der Ausrichtung umfasst, zu einer Datenstruktur;
Bestimmen, basierend auf der Datenstruktur, ob die Person die Absicht hat, die Tür zu öffnen, was Bereitstellen der Datenstruktur für ein Absichtsmaschinenlernmodell umfasst, wobei das Absichtsmaschinenlernmodell konfiguriert ist, basierend auf der Eingabedatenstruktur Absicht oder Fehlen einer Absicht abzuleiten;
Trainieren des Absichtsmaschinenlernmodells, wenn ein Benutzer Öffnen der Tür manuell auslöst, wenn fälschlicherweise Absicht nicht bestimmt wurde.
Wiederholen des Computerprogrammcodes, bis eine Austrittsbedingung erfüllt ist.

15. Computerprogrammprodukt (64, 90), das ein Computerprogramm nach Anspruch 14 und ein computerlesbares Mittel umfasst, das einen nichtflüchtigen Speicher umfasst, auf dem das Computerprogramm gespeichert ist.

## Revendications

1. Procédé de détermination de l'intention d'ouvrir une porte, le procédé étant réalisé par un dispositif de détermination d'intention (1), le procédé comprenant :
l'obtention (40) d'une image d'un espace physique à proximité de la porte ;
la détermination (42) d'une position et d'une orientation d'une personne dans l'image en fournissant l'image à un modèle d'apprentissage automatique d'image, dans lequel le modèle d'apprentissage automatique d'image est configuré pour déterminer la position et l'orientation d'une personne dans l'image, dans lequel le modèle d'apprentissage automatique d'image est configuré pour déterminer un bonhomme stylisé (9) de la personne sur la base de l'image ;
l'ajout (44) d'un élément de données, comprenant un indicateur de la position et un indicateur de l'orientation, à une structure de données ;
la détermination (46), sur la base de la structure de données, pour savoir si la personne a l'intention d'ouvrir la porte, ce qui comprend la fourniture de la structure de données à un modèle d'apprentissage automatique d'intention, dans lequel le modèle d'apprentissage automatique d'intention est configuré pour déduire l'intention ou l'absence d'intention sur la base de la structure de données d'entrée ;
la formation du modèle d'apprentissage automatique d'intention lorsqu'un utilisateur déclenche manuellement l'ouverture de la porte lorsque l'intention n'est pas déterminée par erreur ; et
la répétition du procédé jusqu'à ce qu'une condition de sortie soit vraie.

2. Procédé selon la revendication 1, dans lequel, dans l'étape d'ajout (44) de l'élément de données, l'élément de données comprend des coordonnées de caractéristiques anatomiques représentées par le bonhomme stylisé (9).

3. Procédé selon la revendication 1 ou 2, dans lequel, dans l'étape d'ajout (44) de l'élément de données, l'élément de données comprend une orientation d'au moins une caractéristique anatomique représentée par le bonhomme stylisé (9).

4. Procédé selon l'une quelconque des revendications précédentes, dans lequel l'ajout (44) d'un élément de données comprend l'ajout de l'élément de données tout en préservant sa position dans une séquence par rapport à tous les précédents éléments de données dans la structure de données.

5. Procédé selon l'une quelconque des revendications précédentes, dans lequel la condition de sortie est vraie lorsque le dispositif de détermination d'intention (1) détermine qu'il y a une intention de la personne d'ouvrir la porte et dans lequel le procédé comprend en outre :
l'envoi (48) d'un signal pour procéder à un processus d'ouverture de porte.

6. Procédé selon l'une quelconque des revendications 1 à 4, dans lequel la condition de sortie est vraie lorsqu'il est déterminé que la personne est dans l'image.

7. Procédé selon l'une quelconque des revendications 1 à 6, dans lequel la détermination (42) d'une position et d'une orientation comprend la détermination d'un point central de la personne dans l'image et dans lequel le point central est l'indicateur de position.

8. Procédé selon l'une quelconque des revendications 1 à 7, dans lequel la détermination (42) d'une position et d'une orientation comprend la détermination d'une direction de la personne dans l'image, l'indication d'une direction du torse de la personne et dans lequel la direction de la personne dans l'image est l'indicateur d'orientation.

9. Procédé selon l'une quelconque des revendications 1 à 8, dans lequel l'ajout (44) de l'élément de données comprend l'ajout d'un indicateur de temps à la structure de données, en association avec l'élément de données.

10. Dispositif de détermination d'intention (1) pour déterminer l'intention d'ouvrir une porte, le dispositif de détermination d'intention (1) comprenant :
un processeur (60) ; et
une mémoire (64) stockant des instructions (67) qui, lorsqu'elles sont exécutées par le processeur, amènent le dispositif de détermination d'intention (1) à :
obtenir une image d'un espace physique près de la porte ;
déterminer une position et une orientation d'une personne dans l'image en fournissant l'image à un modèle d'apprentissage automatique d'image, dans lequel le modèle d'apprentissage automatique d'image est configuré pour déterminer la position et l'orientation d'une personne dans l'image, dans lequel le modèle d'apprentissage automatique d'image est configuré pour déterminer un bonhomme stylisé (9) de la personne sur la base de l'image ;
ajouter un élément de données, comprenant un indicateur de la position et un indicateur de l'orientation, à une structure de données ;
déterminer, sur la base de la structure de données, si la personne a l'intention d'ouvrir la porte, ce qui comprend la fourniture de la structure de données à un modèle d'apprentissage automatique d'intention, dans lequel le modèle d'apprentissage automatique d'intention est configuré pour déduire l'intention ou l'absence d'intention sur la base de la structure de données d'entrée ;
entraîner le modèle d'apprentissage automatique d'intention lorsqu'un utilisateur déclenche manuellement l'ouverture de la porte lorsque l'intention n'est pas déterminée par erreur ; et
répéter les instructions jusqu'à ce qu'une condition de sortie soit vraie.

11. Dispositif de détermination d'intention (1) selon la revendication 10, dans lequel l'élément de données comprend des coordonnées de caractéristiques anatomiques représentées par le bonhomme stylisé (9).

12. Dispositif de détermination d'intention (1) selon la revendication 10 ou 11, dans lequel l'élément de données comprend une orientation d'au moins une caractéristique anatomique représentée par le bonhomme stylisé (9).

13. Dispositif de détermination d'intention (1) selon l'une quelconque des revendications 10 à 12, dans lequel les instructions pour ajouter l'indicateur comprennent des instructions (67) qui, lorsqu'elles sont exécutées par le processeur, amènent le dispositif de détermination d'intention (1) à : envoyer un signal pour ajouter l'élément de données tout en préservant sa position dans une séquence par rapport à tous les précédents indicateurs dans la structure de données.

14. Programme informatique (67, 91) pour déterminer l'intention d'ouvrir une porte, le programme informatique comprenant un code de programme informatique qui, lorsqu'il est exécuté sur un dispositif de détermination d'intention (1), amène le dispositif de détermination d'intention (1) à :
obtenir une image d'un espace physique près de la porte ;
déterminer une position et une orientation d'une personne dans l'image en fournissant l'image à un modèle d'apprentissage automatique d'image, dans lequel le modèle d'apprentissage automatique d'image est configuré pour déterminer la position et l'orientation d'une personne dans l'image, dans lequel le modèle d'apprentissage automatique d'image est configuré pour déterminer un bonhomme stylisé (9) de la personne sur la base de l'image ;
ajouter un élément de données, comprenant un indicateur de la position et un indicateur de l'orientation, à une structure de données ;
déterminer, sur la base de la structure de données, si la personne a l'intention d'ouvrir la porte, ce qui comprend la fourniture de la structure de données à un modèle d'apprentissage automatique d'intention, dans lequel le modèle d'apprentissage automatique d'intention est configuré pour déduire l'intention ou l'absence d'intention sur la base de la structure de données d'entrée ;
entraîner le modèle d'apprentissage automatique d'intention lorsqu'un utilisateur déclenche manuellement l'ouverture de la porte lorsque l'intention n'est pas déterminée par erreur ; et
répéter le code du programme informatique jusqu'à ce qu'une condition de sortie soit vraie.

15. Produit de programme informatique (64, 90) comprenant un programme informatique selon la revendication 14 et un moyen lisible par ordinateur comprenant une mémoire non transitoire dans laquelle le programme informatique est stocké.
